# EUROPEAN PATENT SPECIFICATION

(11) **EP 1 807 222 B1**
(45) Date of publication and mention of the grant of the patent: **20.07.2011**
(21) Application number: 05801005.9
(22) Date of filing: 09.09.2005
(51) Int. Cl.: B05D 7/14, B05D 3/06, B05D 7/00

(54) **METHOD FOR SHORT TERM PROTECTION OF AUTOMOTIVE SURFACES**
VERFAHREN ZUM KURZZEITIGEN SCHUTZ VON KRAFTFAHRZEUGFLÄCHEN
PROCEDES DE PROTECTION A COURT TERME DE REVETEMENTS DE VEHICULES AUTOMOBILES

(30) Priority: 10.09.2004 US 608615 P
(43) Date of publication of application: 18.07.2007
(73) Proprietor: Honeywell International Inc., Morristown, NJ 07960 (US)
(72) Inventor: DILLEY, Colin, M., Thomaston, CT 06787 (US); BALOG, David, L., Naugatuck, CT 06770 (US); GALLAGHER, Laurie, A., Bridgewater MA 02324 (US)
(74) Representative: Clarke, Lionel Paul
(86) International application number: PCT/US2005/032324
(87) International publication number: WO 2006/031691

(56) References cited:
- US-A- 3 767 457
- US-A1- 2001 018 467
- US-A1- 2002 028 621
- US-A1- 2003 027 010
- US-A1- 2004 071 950
- US-A1- 2004 191 506

## Description

### BACKGROUND

It is known in the automotive industry that the surface paint finishes of automobiles are subject to a variety of injuries both during the assembly process and during transportation from the assembly plant to retail locations. These finishes may be especially prone to damage in the post manufacturing period because the paint may not be sufficiently cured. The damage inflicted on the surface finish of an automobile during transit can be quite severe. In some case, shipment back to the assembly plant for repainting may be necessary. It will be appreciated that transport damage to recently manufactured vehicles is costly in terms of time, money and efficiency. It would therefore be desirable to provide methods for preventing damage to automotive exterior finishes during post manufacturing transport.

In addition to damage during transit, automobiles may suffer exterior damage during their lifetimes as a result of normal usage. Such damage can occur in a number of different ways. In addition to damage from road debris, automobiles often experience significant weathering damage. Weathering effects may result directly from sun, wind, rain, hail, ice, sleet, and the like, or may result from efforts to mitigate specific weathering effects.

For example, winter is particularly hard on automotive exteriors. In addition to the harsh effects of cold, snow, ice, sleet, and ice, the sand and salt used to provide traction on winter roads has been found to be particularly damaging in regards to automotive exterior finishes. Such winter traction aids may linger on road surfaces for many months. It is would therefore be advantageous to protect automobile exteriors from the effects of weathering damage, especially damage from winter weather and winter road traction aids. Winter is thus a period of greater risk to exterior automotive finishes.

It would therefore be especially advantageous to provide short-term protection against the harsh effects of winter weather and winter road traction aids. Such protection must be easily applied by an average consumer but provide a sufficient barrier against the effects of winter weather and winter road traction aids. On the other hand, any commercially feasible short-term protection must be capable of easy removal by a consumer without damage to the underlying finish and without the production of any hazardous or undesirable waste streams. Finally, during the period of use, the short-term protection must not negatively affect the aesthetic appearance of the exterior automotive finish. Undesirable negative appearance effects include haze, dullness due to loss of gloss, loss of DOI (distinctness of image) and the like.

There have been proposed a number of strippable coating compositions which are applied to the surfaces of an automobile when, for example, the automobile is shipped. After a predetermined period of time, such coatings may be stripped from the automobile.

For example, several types of strippable coating compositions have been described for use on the outer panels of automobiles. One coating is an oily wax type in which paraffin wax is dispersed in a petroleum-based solvent, and the other coating is a type in which a mixture of calcium carbonate powder in paraffin wax is dispersed in a petroleum-based solvent. Another coating is a vinyl-acrylic copolymer emulsion that may be dried on the surface of the automobile and peeled off when no longer desired. Yet another coating includes an acrylic acid copolymer that is coated onto the surface and dried. This coating may be removed by application of an alkaline aqueous detergent solution.
US 2003/0027010 discloses a radiation curable coating comprising an agent that imparts greater strippability to the cured coating. US 2001/0018461 further discloses compositions and methods of priming sheat molding compound parts with a 2 light curable, conductive priming composition. In addition, US 2004/071950 discloses coated substrates, compositions and methods that indicate when a coating is worn and therefore no longer protecting the substrate.

While suitable for their intended purpose, there nonetheless remains a need for additional protective coatings for automobiles.

### SUMMARY

Disclosed are methods of providing short-term protection to an automobile exterior.

In one embodiment, the method comprising applying a layer of a curable automotive coating composition to a portion of an automobile exterior, the curable automotive coating composition comprising a curable acrylate monomer, oligomer, or a combination thereof; a photo-polymerization initiator; and optionally a curable fluorine-containing or sulfur-containing monomer, oligomer, or combination thereof; exposing the layer to natural sunlight to form a cured layer; and removing the cured layer after a period of time post-curing.

The above-described and other features will be appreciated and understood by those skilled in the art from the following detailed description, and appended claims.

### DETAILED DESCRIPTION

In one embodiment, a method of protecting an automobile exterior comprises disposing a layer of a curable automotive coating composition on at least a portion of the automobile exterior, exposing the layer to radiation to form a cured layer, and removing the cured layer after a period of time post-curing. The curable automotive coating composition comprises a curable acrylate monomer, oligomer, or combination thereof; a photo-polymerization initiator; and optionally a curable fluorine-containing or sulfur-containing monomer, oligomer, or combination thereof. The automotive coating composition may be applied to an automobile, cured, and removed at a later time.

Suitable curable acrylate monomers and/or oligomers have two or more acrylate groups per molecule, for example, a compound having two or more acrylate groups having a double bond between the alpha and beta carbon atoms in a carbonyl group. Suitable acrylate esters of polyols include, for example, ethyleneglycol diacrylate, neopentylglycol diacrylate, trimethylolpropane triacrylate, pentaerythritol tetraacrylate, dipentaerythritol hexaacrylate, 1,4-cyclohexyldimethanol diacrylate, 4,4'- isopropiridenedicyclohexanol diacrylate, bis(hydroxymethyl) tricyclo[5,2,1,0]decanediacrylate, 1,3,5-tris (2-hydroxyethyl) cyanuric acid triacrylate and the like, and polyacrylate resins of acrylic polyols, polyacrylate resins of polyether polyols, polyacrylate resins of epoxy polyols, polyacrylate resins of polyurethane polyols, polyacrylate resins of silicone polyols and the like; and combinations comprising one or more of the foregoing acrylate esters of polyols.

Other suitable acrylate monomers and/or oligomers include unsaturated polyesters containing α,β-unsaturated dicarboxylic acid such as fumalic acid, maleic acid, and the like, and combinations comprising one or more of the foregoing unsaturated polyesters. The unsaturated polyester can be obtained by polycondensation of an acid component comprising a polyhydric carboxylic acid containing an α,β- unsaturated dicarboxylic acid such as maleic anhydride or fumalic acid with a polyol.

Yet other suitable acrylate monomers and/or oligomers also include epoxyacrylates, urethane acrylates, acrylics containing an α,β-unsaturated carbonyl group, polyether acrylates, silicone oligomers containing an acryloyl group, and the like, and combinations comprising one or more of the foregoing acrylate monomers and/or oligomers. The epoxyacrylate resin can be obtained by ring opening addition of an epoxy group of an epoxy resin in a bisphenol type, a novolac type or the like, for example, through a reaction with a methacrylic acid or acrylic acid. The above urethane acrylate resin can be obtained by an addition reaction of 2-hydroxyethyl acrylate with a polyisocyanate compound such as isophoronediisocyanate, tolylenediisocyanate, diphenylmethanediisocyanate and hexamethylenediisocyanate, or a urethane prepolymer thereof. Regarding the acrylic resins containing an α,β-unsaturated carbonyl group, an acrylic resin having an acrylate group on a side chain thereof can be obtained by reacting acrylic acid with an acrylic resin resulting from copolymerization of a glycidylacrylate. Contrary to this, an acrylic monomer containing an epoxy group such as glycidyl acrylate may be reacted with an acrylic resin containing a carboxyl group. The above polyether acrylate resin can be obtained, for example, by reacting 2-acryloyloxyethylisocyanate with a polyether having a hydroxyl group at a terminal thereof. The silicone oligomer containing an acryloyl group may be, for example, polyorganosiloxanes having 3-acryloyloxypropyl groups at both terminals thereof, and the like.

Additional suitable diacrylates include, but are not limited to, propylene glycol diacrylate, diethylene glycol diacrylate, dipropylene glycol diacrylate, triethylene glycol diacrylate, tripropylene glycol diacrylate, tertraethylene glycol diacrylate, tetrapropylene glycol diacrylate, polyethylene glycol diacrylate, polypropylene glycol diacrylate, ethoxylated bisphenol A diacrylate, bisphenol A diglycidyl ether diacrylate, resorcinol diglycidyl ether diacrylate, 1,3-propanediol diacrylate, 1,4-butanediol diacrylate, 1,5- pentanediol diacrylate, 1,6-hexanediol diacrylate, cyclohexane dimethanol diacrylate, ethoxylated neopentyl glycol diacrylate, propoxylated neopentyl glycol diacrylate, ethoxylated cyclohexanedimethanol diacrylate, propoxylated cyclohexanedimethanol diacrylate, epoxy diacrylate, aryl urethane diacrylate, aliphatic urethane diacrylate, polyester diacrylate, and combinations comprising one or more of the foregoing diacrylates. Suitable diacrylates include ethoxylated (30) bisphenol A diacrylate, a 30 mole ethoxylated bisphenol A diacrylate, available as CD9038 from Sartomer; polyethylene glycol (600) diacrylate, available as SR610 from Sartomer; and combinations comprising one or more of the foregoing diacrylates.

Additional suitable triacrylates include, but are not limited to, glycerol triacrylate, ethoxylated trimethylolpropane triacrylate, propoxylated trimethylolpropane triacrylate, tris (2- hydroxyethyl) isocyanurate triacrylate, ethoxylated glycerol triacrylate, propoxylated glycerol triacrylate, pentaerythritol triacrylate, aryl urethane triacrylates, aliphatic urethane triacrylates, melamine triacrylates, epoxy novolac triacrylates, aliphatic epoxy triacrylate, polyester triacrylate, ethoxylated versions of the foregoing triacrylates, and combinations comprising one or more of the foregoing triacrylates. A suitable triacrylate is ethoxylated (20) trimethylolpropane triacrylate, a 20 mole ethoxylated trimethylolpropane triacrylate, available as SR415 from Sartomer.

Additional suitable tetraacrylates include, but are not limited to, ditrimethylolpropane tetraacrylate, pentaerythritol tetraacrylate, ethoxylated pentaerythritol tetraacrylate, propoxylated pentaerythritol tetraacrylate, dipentaerythritol tetraacrylate, ethoxylated dipentaerythritol tetraacrylate, propoxylated dipentaerythritol tetraacrylate, aryl urethane tetraacrylates, aliphatic urethane tetraacrylates, polyester tetraacrylates, melamine tetraacrylates, epoxy novolac tetraacrylates, and combinations comprising one or more of the foregoing tetraacrylates.

Combinations comprising one or more of the foregoing curable acrylate monomers and oligomers may also be employed, for example, a combination of a diacrylate monomer and a triacrylate monomer. In one embodiment, the curable acrylate oligomer comprises ethoxylated bisphenol A diacrylate; polyethylene glycol diacrylate; ethoxylated trimethylolpropane triacrylate; and combinations comprising one or more of the foregoing acrylate monomers.

The amount of the curable acrylate monomer, oligomer, or combination thereof, in the curable automotive coating composition is about 10 percent by weight (wt%) to about 99 wt% based on the total weight of the curable automotive coating composition. In another embodiment, the amount of the curable acrylate monomer, oligomer, or combination thereof, in the curable coating composition is about 40 wt% to about 80 wt% based on the total weight of the curable automotive coating composition.

The curable automotive coating composition also comprises a photo-polymerization initiator. Suitable photo-polymerization initiators for the curable automotive coating composition include, for example, benzoins and benzoin alkylethers such as benzoin, benzoin methylether, benzoin ethylether and benzoin propylether; acetphenones such as acetophenone, 2,2-dimethoxy-2-phenylacetophenone, 2,2-diethoxy-2-phenylacetophenone, 1,1-dichloroacetophenone; aminoacetophenones such as 2-methyl-1-[4-(methylthio)phenyl]-2-morpholinopropanone-1,2 -benzyl-2-dimethylamino-1-(4-morpholinophenyl)-butanone-1, N,N-dimethylaminoacetophenone; anthraquinones such as 2-methylanthraquinone, 2-ethylanthraquinone, 2- tert-butylanthraquinone, 1-chloroanthraquinone; thioxanthones such as 2,4- dimethyl thioxanthone, 2,4-diethyl thioxanthone, 2-chloro thioxanthone and 2,4-diisopropyl thioxanthone; ketals such as acetophenone dimethylketal and benzyl methylketal; benzophenones or xanthones such as benzophenone and 4,4'-bisdiethylaminobenzophenone; 2,4,6-trimethylbenzoyldiphenylphosphine oxide; iodonium salts, sulfonium salts and diazonium salts of aromatic compounds; polysilane compounds; and combinations comprising one or more of the foregoing photo-polymerization initiators.

In one embodiment, the photo-polymerization initiator is one that can initiate photopolymerization in the presence of natural sunlight such as those photo-polymerization initiators that have absorption bands in the visible light wavelengths, at wavelengths of UV light present in natural sunlight, or a combination thereof. Such photo-polymerization initiators include, for example, benzophenone; derivatives of benzophenone; 5,7-diiodo-3-butoxy-6-fluorone, a visible-light-harvesting photo-polymerization inhibitor available as H-NU 740 from Spectra Group; and the like; and combinations comprising one or more of the foregoing photo-polymerization initiators. A suitable photo-polymerization initiator is a blend of phosphine oxide, alpha-hydroxyketone and benzophenone derivative available as SR1135 from Sartomer.

The amount of photo-polymerization initiator is not specifically limited, but set properly according to the absorbance of the initiator or

dye at the wavelengths of polymerization. The amount of the photo-polymerization initiator in the curable automotive coating composition is about 0.01 wt% to about 5 wt% based on the total weight of the curable automotive coating composition. When the photo-polymerization inhibitor comprises SR1135, the SR1135 comprises about 1 wt% to about 5 w% based on the total weight of the curable automotive composition.

The curable automotive coating composition optionally further comprises a reactive fluorine-containing or sulfur-containing monomer, oligomer, or combination thereof. In one embodiment, the reactive fluorine-containing monomer is a fluorinated polyether diol. Suitable fluorinated polyether diols may be prepared using oxetane chemistry and are commercially available from Omnova Solutions Inc. under the trade name PolyFox®, including PolyFox® 6320, 6520, 636, 656, and combinations comprising one or more of the foregoing fluorinated polyether diols. In another embodiment, the reactive fluorine-containing monomer comprises a curable fluorine-containing monomer. The curable fluorine-containing monomer and/ or oligomer comprises a fluorinated compound to which at least one curable functional group is bound. Suitable curable functional groups include, for example, groups containing vinyl, acrylate, methacrylate, maleate, vinyl ether, acrylamide, and combinations comprising one or more of the foregoing functional groups. An examples of a commercially available fluorinated compound containing a curable functional group include is PolyFox® 3320, commercially available from Omnova Solutions. An example of a reactive sulfur-containing compound is Coat-O-Sil 3509® commercially available from Omnova Solutions.

The amount of the optional reactive fluorine-containing or sulfur-containing monomer, oligomer, or combination thereof in the curable automotive coating composition is about 0 wt% to about 5 wt% based on the total weight of the curable automotive coating composition. In another embodiment, the amount of the reactive fluorine-containing or sulfur-containing monomer, oligomer, or combination thereof in the curable automotive coating composition is about 0 wt% to about 3 wt% based on the total weight of the curable automotive coating composition.

The curable automotive coating composition can comprise a solvent, an additive, and the like, and combinations comprising one or more of the foregoing. Suitable solvents include, for example, water, organic solvents, and combinations thereof.

Other materials well-known to the coatings artisan, for example, surfactants, fillers, stabilizers, wetting agents, dispersing agents, adhesion promoters, UV absorbers, light stabilizers such as HALS, antioxidants, solvents, catalysts, antifoam agents, viscosity modifiers, and/or rheology control agents, may be incorporated into the disclosed coating composition. The amount of these materials used must be controlled to achieve the desired performance properties and/or to avoid adversely affecting the coating characteristics.

The curable automotive coating composition may be packaged in an opaque package to protect the composition from ambient radiation prior to use. The protective coatings obtained from the curable automotive coating composition are especially advantageous in that they are durable and provide protection against stone chips and bug damage. In one embodiment, such films can be removed and reapplied.

The curable automotive coating composition is applied to a portion of an automobile exterior to form a layer.

The term 'automotive exterior' as used herein refers to any exterior surface of a vehicle having at least two wheels moved by a power source such as an internal combustion engine, electric motors, fuel cells, and the like, as well as combinations thereof. Exterior surfaces include coated surfaces, glass surfaces, metal surfaces, plastic surfaces, and combinations thereof. However, in one exemplary embodiment, an automotive exterior will be a cured coated surface of an automobile, such as a paint surface. Such painted surfaces may be OEM (original equipment manufacturers) finishes or refinish coatings.

The curable automotive coating composition is applied by one of a variety of techniques known for the application of paint, including, but not limited to, application by brush, foam brush, pad, sponge, aerosol roller, spray, dipping, spreading (e.g. using a doctor bar), and the like, and combinations comprising one or more of the foregoing application techniques. In one exemplary embodiment, the disclosed compositions will be applied by foam brush.

The curable automotive coating composition may be applied at a thickness of about 0.5 mil to about 200 mil (about 0.012 mm to about 5.1 mm), although other thicknesses may be employed.

In the case of a curable automotive coating composition, once the film is formed, the film is cured using light. The wavelength of light used to initiate photo-polymerization depends upon the photo-polymerization initiator employed. Suitable light sources include natural sunlight; carbon arc lamps; xenon arc lamps; medium-pressure, high-pressure and low-pressure mercury lamps optionally doped with metal halides (metal halogen lamps); microwave-stimulated metal vapor lamps; excimer lamps; superactinic fluorescent tubes; fluorescent lamps; incandescent argon lamps; flashlights; photographic floodlight lamps light-emitting diodes (LED), electron beams, X-rays, and combinations comprising one or more of the foregoing light sources. The distance between the light source and the substrate to be exposed can vary depending on the intended use and lamp type and intensity. In one embodiment, the light source is natural sunlight.

The invention is further illustrated by the following non-limiting examples.

### Examples 1-3: Curable Acrylate Compositions

Curable automotive coating compositions were mixed according to the amounts shown in Table 1. Films were made by spreading the coating compositions onto automotive panels followed by curing in sunlight.

**Table 1**

| **Example** | **1** | **2** | **3** |
|---|---|---|---|
| CD 9038 ethoxylated (30) bisphenol A diacrylate | 80 wt% | 40 wt% | 40 wt% |
| SR610 polyethylene glycol (600) diacrylate | - | 40 wt% | - |
| SR415 ethoxylated (20) trimethylolpropane triacrylate | - | - | 40 wt% |
| SR1135 photo-polymerization initiator: phosphine oxide, alpha-hydroxyketone and benzophenone | 3 wt% | 3 t% | 3 wt% |
| derivative | | | |
| Water | 17 wt% | 17 wt% | 17 wt% |
| | | | |
| **Properties** | Films crack | Films do not crack | Films do not crack |

The films formed according to Examples 2 and 3 did not crack easily and were removed via loosening with soapy water followed by peeling of the layer.

Methods of coating automobiles to protect the exterior finish are described. An advantage of the curable coating composition is that it can be applied by consumers and cured using natural sunlight.

As used herein, "alkyl" is intended to include both branched and straight-chain saturated aliphatic hydrocarbon groups, having the specified number of carbon atoms. Thus, the term C₁ to C₆ alkyl as used herein includes alkyl groups having 1 to 6 carbon atoms. When C₀ to Cₙ alkyl is used herein in conjunction with another group, for example, (phenyl)C₀ to C₄ alkyl, the indicated group, in this case phenyl, is either directly bound by a single covalent bond (C₀), or attached by an alkyl chain having the specified number of carbon atoms, in this case from 1 to about 4 carbon atoms. Examples of alkyl include, but are not limited to, methyl, ethyl, n-propyl, isopropyl, n-butyl, t-butyl, n-pentyl, and sec-pentyl.

All ranges disclosed herein are inclusive and combinable. The terms "first," "second," and the like, herein do not denote any order, quantity, or importance, but rather are used to distinguish one element from another, and the terms "a" and "an" herein do not denote a limitation of quantity, but rather denote the presence of at least one of the referenced item. "Optional" or "optionally" means that the subsequently described event or circumstance may or may not occur, and that the description includes instances where the event occurs and instances where it does not. The modifier "about" used in connection with a quantity is inclusive of the stated value and has the meaning dictated by the context (e.g., includes the degree of error associated with measurement of the particular quantity).

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method of protecting an automobile exterior comprising:
disposing a layer of a curable automotive coating composition on at least a portion of the automobile exterior, the curable automotive coating composition comprising a curable acrylate monomer, oligomer, or a combination thereof; a photo-polymerization initiator; and optionally a reactive fluorine-containing or sulfur-containing monomer, oligomer, or combination thereof;
exposing the layer to natural sunlight to form a cured layer; and
removing the cured layer after a period of time post-curing.

2. The method of claim 1, wherein removing comprises contacting at least a portion of the layer with soapy water followed by stripping at least a portion of the cured layer from the automobile exterior.

3. The method of claim 1, wherein the curable acrylate monomer, oligomer, or combination thereof, is an acrylate ester of a polyol, a polyacrylate resin of an acrylic polyol, a polyacrylate resin of a polyether polyol, a polyacrylate resin of an epoxy polyol, a polyacrylate resin of a polyurethane polyol, a polyacrylate resin of a silicone polyol, an unsaturated polyester containing an α,β-unsaturated dicarboxylic acid, an epoxyacrylate, a urethane acrylate, an acrylic containing an α,β-unsaturated carbonyl group, a polyether acrylate, a silicone oligomer containing an acryloyl group, or a combination comprising one or more of the foregoing acrylates.

4. The method of claim 3, wherein the curable acrylate monomer, oligomer, or combination thereof, is an ethoxylated bisphenol A diacrylate, a polyethylene glycol diacrylate, an ethoxylated trimethylolpropane triacrylate, or a combination comprising one or more of the foregoing acrylates.

5. The method of claim 1, wherein the photo-polymerization initiator has absorption bands at visible light wavelengths, at UV light wavelengths present in natural sunlight, or a combination thereof.

6. The method of claim 5, wherein the photo-polymerization initiator is benzophenone; a derivative of benzophenone; 5,7-diiodo-3-butoxy-6-fluorone; or a combination comprising one or more of the foregoing photo-polymerization initiators.

7. The method of claim 1, wherein the reactive fluorine-containing monomer comprises a fluorinated polyether diol.

## Patentansprüche

1. Verfahren zum Schutz einer Kraftfahrzeugaußenfläche, umfassend:
Vorsehen einer Schicht aus einer härtbaren Kraftfahrzeugbeschichtungszusammensetzung auf zumindest einem Teil der Kraftfahrzeugaußenfläche, wobei die härtbare Kraftfahrzeugsbeschichtungszusammensetzung ein härtbares Acrylatmonomer, -oligomer oder eine Kombination davon umfasst; einen Photopolymerisationsinitiator; und gegebenenfalls ein reaktives fluorhaltiges oder schwefelhaltiges Monomer, Oligomer oder eine Kombination davon umfasst;
Exponieren der Schicht an natürliches Sonnenlicht zur Bildung einer gehärteten Schicht; und
Entfernen der gehärteten Schicht nach einem Zeitraum des Nachhärtens.

2. Verfahren gemäß Anspruch 1, wobei das Entfernen das Kontaktieren zumindest eines Teils der Schicht mit Seifenwasser, gefolgt von einem Ablösen zumindest eines Teils der gehärteten Schicht von der Kraftfahrzeugaußenfläche, umfasst.

3. Verfahren gemäß Anspruch 1, wobei das härtbare Acrylatmonomer, -oligomer oder eine Kombination davon ein Acrylatester eines Polyols, ein Polyacrylatharz eines Acrylpolyols, ein Polyacrylatharz eines Polyetherpolyols, ein Polyacrylatharz eines Epoxypolyols, ein Polyacrylatharz eines Polyurethanpolyols, ein Polyacrylatharz eines Silikonpolyols, ein ungesättigter Polyester, enthaltend eine α,β-ungesättigte Dicarbonsäure, ein Epoxyacrylat, ein Urethanacrylat, ein Acryl, enthaltend eine α,β-ungesättigte Carbonylgruppe, ein Polyetheracrylat, ein Silikonoligomer, enthaltend eine Acryloylgruppe, oder eine Kombination, umfassend ein oder mehrere der vorgenannten Acrylate, ist.

4. Verfahren gemäß Anspruch 3, wobei das härtbare Acrylatmonomer, -oligomer oder eine Kombination davon ein ethoxyliertes Bisphenol-A-diacrylat, ein Polyethylenglykoldiacrylat, ein ethoxyliertes Trimethylolpropantriacrylat oder eine Kombination, umfassend ein oder mehrere der vorgenannten Acrylate, ist.

5. Verfahren gemäß Anspruch 1, wobei der Photopolymerisationsinitiator Absorptionsbanden bei Wellenlängen von sichtbarem Licht, bei UV-Licht-Wellenlängen, die in natürlichem Sonnenlicht vorliegen, oder einer Kombination davon aufweist.

6. Verfahren gemäß Anspruch 5, wobei der Photopolymerisationsinitiator Benzophenon; ein Derivat von Benzophenon; 5,7-Diiod-3-butoxy-6-fluoren; oder eine Kombination, umfassend einen oder mehrere der vorgenannten Photopolymerisationsinitiatoren, ist.

7. Verfahren gemäß Anspruch 1, wobei das reaktive fluorhaltige Monomer ein fluoriertes Polyetherdiol umfasst.

## Revendications

1. Procédé de protection d'un extérieur d'automobile comprenant :
l'application d'une couche d'une composition de revêtement pour automobile durcissable sur au moins une partie de l'extérieur d'automobile, la composition de revêtement pour automobile durcissable comprenant un monomère ou oligomère acrylate durcissable, ou une association de ceux-ci ; un initiateur de photopolymérisation ; et facultativement un monomère ou oligomère contenant du soufre ou contenant du fluor réactif, ou une association de ceux-ci ;
l'exposition de la couche à de la lumière naturelle pour former une couche durcie ; et
l'élimination de la couche durcie au bout d'un certain temps après durcissement.

2. Procédé selon la revendication 1, dans lequel l'élimination comprend la mise en contact d'au moins une partie de la couche avec de l'eau savonneuse suivie par le pelage d'au moins une partie de la couche durcie de l'extérieur d'automobile.

3. Procédé selon la revendication 1, dans lequel le monomère ou oligomère acrylate durcissable, ou l'association de ceux-ci, est un ester de type acrylate d'un polyol, une résine de polyacrylate d'un polyol acrylique, une résine de polyacrylate d'un polyol de polyéther, une résine de polyacrylate d'un époxypolyol, une résine de polyacrylate d'un polyol de polyuréthane, une résine de polyacrylate d'un polyol de silicone, un polyester insaturé contenant un acide dicarboxylique à insaturation α,β, un époxyacrylate, un acrylate d'uréthane, un acrylique contenant un groupe carbonyle à insaturation α,β, un acrylate de polyéther, un oligomère de silicone contenant un groupe acryloyle, ou une association comprenant un ou plusieurs des acrylates susdits.

4. Procédé selon la revendication 3, dans lequel le monomère ou oligomère acrylate durcissable, ou l'association de ceux-ci, est un diacrylate de bisphénol A éthoxylé, un diacrylate de polyéthylèneglycol, un triacrylate de triméthylolpropane éthoxylé ou une association comprenant un ou plusieurs des acrylates susdits.

5. Procédé selon la revendication 1, dans lequel l'initiateur de photopolymérisation a des bandes d'absorption aux longueurs d'onde de la lumière visible, aux longueurs d'onde de la lumière UV présentes dans la lumière naturelle, ou une association de celles-ci.

6. Procédé selon la revendication 5, dans lequel l'initiateur de photopolymérisation est la benzophénone ; un dérivé de benzophénone ; la 5,7-diiodo-3-butoxy-6-fluorone ; ou une association comprenant un ou plusieurs des initiateurs de photopolymérisation susdits.

7. Procédé selon la revendication 1, dans lequel le monomère contenant du fluor réactif comprend un diol de polyéther fluoré.
